# EUROPÄISCHE PATENTSCHRIFT

(11) **EP 3 425 204 B1**
(45) Veröffentlichungstag und Bekanntmachung des Hinweises auf die Patenterteilung: **14.04.2021**
(21) Anmeldenummer: 18176046.3
(22) Anmeldetag: 05.06.2018
(51) Int. Cl.: F04D 13/06, F04D 29/02, H02K 1/02, H02K 1/04, H02K 1/27, F04D 29/048, H02K 15/03, H01F 41/02, H02K 7/09, H02K 7/14, F04D 25/06, F04D 29/22, H02K 3/44, H02K 5/128

(54) **MAGNETISCH LAGERBARER ROTOR SOWIE ROTATIONSMASCHINE MIT EINEM SOLCHEN ROTOR**
MAGNETIC ROTOR AND MACHINE WITH SUCH A ROTOR
ROTOR MAGNÉTIQUE ET MACHINE COMPRENANT UN TEL ROTOR

(30) Priorität: 04.07.2017 EP 17179501
(43) Veröffentlichungstag der Anmeldung: 09.01.2019
(73) Patentinhaber: Levitronix GmbH, 8005 Zürich (CH)
(72) Erfinder: Barletta, Natale, 8048 Zürich (CH); Foiera, Giampiero, 8957 Spreitenbach (CH); Eberle, Thomas, 8404 Winterthur (CH); Schöb, Reto, 8806 Bäch SZ (CH); Gempp, Thomas, 8964 Rudolfstetten (CH); Hoffmann, Mathias, 5702 Niederlenz (CH)
(74) Vertreter: Intellectual Property Services GmbH

(56) Entgegenhaltungen:
- EP-A2- 2 549 113
- WO-A1-2004/036051
- DE-A1-102010 023 878
- JP-A- H0 341 703
- JP-A- H07 130 520
- US-A1- 2017 084 372

## Beschreibung

### Magnetisch lagerbarer Rotor sowie Rotationsmaschine mit einem solchen Rotor

Die Erfindung betrifft einen magnetisch lagerbaren Rotor für eine Rotationsmaschine mit magnetisch gelagertem Rotor sowie eine Rotationsmaschine gemäss dem Oberbegriff des unabhängigen Patentanspruchs der jeweiligen Kategorie.

Rotationsmaschinen, mit magnetisch gelagertem Rotor, beispielsweise Zentrifugalpumpen oder Misch-, oder Rührvorrichtungen werden in vielen technischen Gebieten eingesetzt, insbesondere für solche Anwendungen, bei denen hoch reine Fluide gefördert, gerührt oder gemischt werden, ohne dass die Fluide durch Abrieb-Partikel aus mechanischen Lagern kontaminiert werden. So werden in der Halbleiterindustrie magnetisch gelagerte Rotoren beispielsweise zum Fördern von Reinstwasser aber auch säurehaltigen, oxidierenden oder sonst chemisch aggressiven Fluiden eingesetzt, wie sie in der Halbleiterindustrie zur Herstellung oder zur Bearbeitung von Halbleiterstrukturen verwendet werden. Dabei ist es entscheidend, dass aus dem magnetisch gelagerten Rotor keine Metallionen in die Flüssigkeiten gelangen, da solche Metallionen die Dotierung der Halbleiter verändern könnten.

Bezüglich der Ausgestaltung von Rotationsmaschinen, insbesondere Zentrifugalpumpen, mit magnetisch gelagertem Rotor, sind Vorrichtungen bekannt, bei welchen der Rotor mittels separater Magnetlager berührungslos gelagert wird, während die Rotation des Rotors durch eine separate Antriebseinheit angetrieben wird. Jedes Magnetlager umfasst dabei typischerweise einen Lagerstator, welcher mit einem magnetisch wirksamen Kern des Rotors wechselwirkt, um den Rotor magnetisch zu lagern. Die Antriebseinheit umfasst einen Antriebsstator, mit welchem der Rotor nach dem Prinzip eines elektromagnetischen Drehantriebs in Rotation versetzt wird.

Es sind aber auch solche Ausgestaltungen von Rotationsmaschinen mit magnetisch berührungslos gelagertem Rotor bekannt, bei welchen keine separaten Magnetlager vorgesehen sind, sondern die Lagerfunktion und die Antriebsfunktion mit dem gleichen Stator realisiert werden. Für solche Ausgestaltungen hat sich die Bezeichnung "lagerloser Motor" etabliert, weil eben keine separaten Magnetlager für den Rotor vorgesehen sind. Die Antriebs- und die Lagerfunktion können nicht voneinander getrennt werden. Diese besonders effizienten lagerlosen Motoren zeichnen sich insbesondere durch ihre äusserst kompakte Bauform bei gleichzeitiger Realisierung des "berührungslosen" Konzepts aus.

Ein lagerloser Motor ist also ein elektromagnetischer Drehantrieb, bei welchem der Rotor vollkommen magnetisch bezüglich des Stators gelagert ist, wobei keine separaten magnetischen Lager vorgesehen sind. Der Stator ist dazu als Lager- und Antriebsstator ausgestaltet, der sowohl Stator des elektrischen Antriebs als auch Stator der magnetischen Lagerung ist. Mit den elektrischen Wicklungen des Lager- und Antriebsstators lässt sich ein magnetisches Drehfeld erzeugen, welches zum einen ein Drehmoment auf den Rotor ausübt, das dessen Rotation bewirkt, und welches zum anderen eine beliebig einstellbare Querkraft auf den Rotor ausübt, sodass dessen radiale Position aktiv steuerbar bzw. regelbar ist.

Insbesondere bei der Ausgestaltung als Pumpe, Mischer oder Rührer ist der Rotor der Rotationsmaschine häufig ein Integralrotor, welcher sowohl der Rotor des elektromagnetischen Antriebs ist, als auch der Rotor der Pumpe oder des Mischers, welcher auf das Fluid einwirkt.

Für die Ausgestaltung des magnetisch wirksamen Kerns des Rotors sind auch verschiedene Konzepte bekannt. So kann der magnetisch wirksame Kern beispielsweise nur aus einem oder mehreren Permanentmagneten bestehen, sodass der gesamte magnetisch wirksame Kern des Rotors aus permanentmagnetischem Material besteht. Es sind aber auch solche Ausgestaltungen bekannt, bei welchen der magnetisch wirksame Kern einen oder mehrere Permanentmagnete umfasst, die mit weichmagnetischen Teilen kombiniert werden. Üblicherweise bestehen die weichmagnetischen Teile aus Eisen oder Nickel-Eisen oder Silizium-Eisen.

Unabhängig davon, ob die Rotationsmaschine, also beispielsweise die Zentrifugalpumpe, mit separaten Magnetlagern oder nach dem Konzept des lagerlosen Motors ausgestaltet ist, ist es insbesondere für das Fördern von säurehaltigen oder chemisch aggressiven Substanzen ein wesentlicher Aspekt, den magnetisch wirksamen Kern des Rotors und insbesondere auch den oder die Permanentmagnete(n) gegen derartige aggressive Substanzen zu schützen. Die typischerweise für Permanentemagnete verwendeten Materialien wie z. B. Neodyn, Samarium oder Cobalt weisen in der Regel nur eine sehr geringe Widerstandskraft gegen solche aggressiven Substanzen auf.

Säurehaltige oder andere chemisch aggressive Substanzen, die beispielsweise in der Halbleiterfertigung eingesetzt und gefördert werden müssen, sind z. B. Ozonwasser (O3 in H₂O gelöst), Schwefelsäure (H₂SO₄), Phosphorsäure (H₃PO₄), Salzsäure (HCl), Flusssäure (HF), Salpetersäure (HNO₃), Ozon (O₃), oder auch Mischungen, beispielsweise aus Schwefelsäure (H₂SO₄) und Wasserstoffperoxid (H₂O₂) oder aus Schwefelsäure (H₂SO₄) und Salpetersäure (HNO₃). Erschwerend kommt hinzu, dass diese aggressiven Substanzen häufig auch unter erhöhten Temperaturen, z.B. bei 150°C bis 200°C oder sogar noch mehr, bereit gestellt werden müssen.

Zum Schutz gegen solche aggressiven Sustanzen ist es bekannt, den magnetisch wirksamen Kern des Rotors und insbesondere die Permanentmagnete oder den Permanentmagneten mit einer Kunststoffummantelung aus einem fluorierten Kohlenwasserstoff zu versehen, weil diese Kohlenwasserstoffe eine recht gute Resistenz gegen chemisch aggressive Substanzen, insbesondere gegen die zuvor genannten Säuren zeigen.

Allerdings bilden die fluorierten Kohlenwasserstoffe sehr häufig keine ausreichende Barriere gegen gasförmige Bestandteile der Chemikalien. So hat eine Verkapselung aus einem fluorierten Kohlenwasserstoff z.B. nur eine sehr eingeschränkte Barrierewirkung gegen Ozon (O₃), das z.B. in einem zu pumpenden Gemisch aus Schwefelsäure und Ozon (H₂SO₄ mit O₃) in wesentlichen Mengen enthalten sein kann. Untersuchungen haben ferner gezeigt, dass auch mit solchen Ummantelungen aus fluorierten Kohlenwasserstoffen nach relativ kurzen Betriebszeiten Korrosionserscheinungen insbesondere an den Permanentmagneten des Rotors auftreten. Dies kann zum Aufblähen des Rotors führen, zur Degradation der metallischen Beschichtung, zum Abplatzen von Teilen des Rotorkerns oder der Ummantelung bis hin zur vollkommenen Zerstörung des magnetisch wirksamen Kerns des Rotors.

In der EP-A-2 549 113 ist daher vorgeschlagen worden, den Permanentmagneten des Rotors mit einer doppelten Ummantelung zu versehen, nämlich mit einer inneren metallischen Ummantelung, welche den Permanentmagneten vollständig umschliesst, und mit einer äusseren Ummantelung aus einem fluorierten Kohlenwasserstoff, welche die metallische Ummantelung vollständig umschliesst.

Dabei ist es die Idee, dass die äussere Kunststoffummantelung den Permanentmagneten bzw. den magnetisch wirksamen Kern gegen die üblicherweise flüssigen Säuren schützt, während die innere metallische Ummantelung den magnetisch wirksamen Kern gegen gasförmige Komponenten schützt, welche die Kunststoffummantelung relativ gut durchdringen können.

Auch wenn sich dieses Konzept der doppelten Ummantelung in der Praxis gut bewährt hat, so besteht trotzdem noch Verbesserungsbedarf. Einerseits ist die in der EP-A-2 549 113 vorgeschlagene dickwandige Ummantelung des Permanentmagneten des Rotors aus Metall relativ schwierig umsetzbar, da die Verschweissung der einzelnen Teile der Ummantelung einerseits gasdicht sein muss, aber andererseits der Energieeintrag bei der Verschweissung genügend klein gehalten werden muss, sodass sich das Gefüge des permanentmagnetischen Materials nicht verändert. Dieses Problem wird dadurch erschwert, dass die Ummantelung aus Metall relativ eng am Permanentmagneten anliegen muss, da der magnetische Luftspalt bei einer magnetischen Lagerung nicht ohne hohe Krafteinbusse vergrössert werden kann. Dadurch wird die für die Verschweissung der Ummantelung erforderliche Wärme unmittelbar in den Permanentmagneten des Rotors abgeleitet. Zudem können Ozon, Wasserstoff oder Säuredämpfe durch den Kunststoff hindurch diffundieren und die metallische Ummantelung angreifen. Wenn die metallische Ummantelung des Rotors einmal angegriffen wurde, können dann umgekehrt Metallionen durch die Kunststoffummantelung hindurch in das zu fördernde Fluid diffundieren und das Fluid kontaminieren. Bei Anwendungen in der Halbleiterindustrie können solche Metallionen in dem Fluid äusserst negative Folgen haben, weil beispielsweise die gelösten Metallionen schon in ganz geringen Konzentrationen die Dotierung der zu behandelnden Halbleiterstrukturen in unkontrollierter Weise ändern können und so die Halbleiterprodukte im schlimmsten Fall unbrauchbar machen können.

Es sind daher sehr grosse Anstrengungen unternommen worden, um den magnetisch wirksamen Kern des Rotors besser gegen säurehaltige oder andere chemisch aggressive Substanzen zu schützen und gleichzeitig das oben beschriebene Problem der Schweissung einer metallischen Ummantelung des Permanentmagneten zu umgehen. Dazu wurden verschiedenste Metallschichten galvanisch auf den Permanentmagneten aufgebracht und auf deren Korrosionsbeständigkeit getestet. Aber selbst als äusserst inert geltende galvanisch aufgebrachte metallische Ummantelungen, beispielsweise unter Verwendung von Gold oder Rhodium, haben überraschenderweise nicht zu wirklich befriedigenden Resultaten geführt. Bereits nach relativ kurzen Standzeiten von beispielsweise 100-200 Stunden können massive Korrosionserscheinungen am Rotor auftreten.

Es lässt sich vermuten, dass insbesondere Substanzen mit sehr kleinen Molekülen, beispielsweise Salzsäure (HCL) oder Flusssäure (HF) oder auch Ozon (O₃), über Gitter- oder Gefügefehler in der metallischen Schicht, z. B. Lunker oder Haarrisse, durch die Ummantelung hindurch diffundieren und dann den Permanentmagneten bzw. den magnetisch wirksamen Kern des Rotors angreifen, sodass der Rotor von innen heraus korrodiert.

Diesem Problem widmet sich die vorliegende Erfindung.

Ausgehend von diesem Stand der Technik ist es daher eine Aufgabe der Erfindung, einen magnetisch lagerbarer Rotor für eine Rotationsmaschine vorzuschlagen, bei welchem der magnetisch wirksame Kern und insbesondere ein Permanentmagnet des Rotors besonders gut gegen oxidierende und säurehaltige Substanzen oder andere chemisch aggressive Substanzen geschützt ist. Ferner soll durch die Erfindung eine Rotationsmaschine mit einem solchen Rotor vorgeschlagen werden.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein magnetisch lagerbarer Rotor vorgeschlagen, für eine Rotationsmaschine mit magnetisch gelagertem Rotor, welcher Rotor einen magnetisch wirksamen Kern aufweist, sowie eine Ummantelung aus einem thermoplastisch verarbeitbaren Fluoropolymer, wobei die Ummantelung den magnetisch wirksamen Kern vollständig umschliesst, wobei der magnetisch wirksame Kern mindestens einen Permanentmagneten umfasst, und wobei jeder Permanentmagnet eine metallische Beschichtung zum Schutz gegen säurehaltige oder chemisch aggressive Substanzen aufweist, und wobei zwischen der metallischen Beschichtung und der Ummantelung eine Kunststoffbeschichtung vorgesehen ist, welche aus einem Polymer besteht, das zur Familie der Parylene gehört.

Vorzugsweise haftet die metallische Beschichtung direkt auf dem Permanentmagneten.

Sehr aufwendige und umfangreiche Untersuchungen haben gezeigt, dass gerade diese Kombination aus einer metallischen Beschichtung des Permanentmagneten, die direkt auf dem Permanentmagneten haftet, mit einer äusseren Ummantelung aus einem Fluoropolymer und einer dazwischen angeordneten Beschichtung mit einem Parylene einen besonders guten und lange anhaltenden Schutz des magnetisch wirksamen Kerns des Rotors gegen Säuren, säurehaltige Fluide und andere chemisch aggressive Substanzen wie beispielsweise Ozon oder Wasserstoff gewährleisten. Durch diese spezielle Kombination ist der magnetisch wirksame Kern des Rotors sowohl gegen aggressive flüssige Komponenten, z. B. flüssige Säuren, als auch gegen gasförmige Bestandteile geschützt. Insbesondere wird auch das Diffundieren von Substanzen mit sehr kleinen Molekülen, beispielsweise Wasserstoff (H2), Ozon (O3), Flusssäure (HF) oder Salzsäure (HCL), zum magnetisch wirksamen Kern des Rotors bzw. zum Permanentmagneten verhindert oder zumindest deutlich reduziert. Im Vergleich zu den Fluoropolymeren der äusseren Ummantelung, sind die Polymerketten der Parylene wesentlich länger, wodurch diese im Vergleich zu den Fluoropolymeren eine deutlich bessere Diffusionsbarriere bilden.

Parylene ist die auch als Handelsname verwendete Bezeichnung für eine Gruppe von Poly(p-xylylen) Polymeren, welche durch chemische Gasphasenabscheidung erzeugt werden. Das Ausgangsmaterial ist p-Xylol (Xylol wird auch als Xylen oder Dimethylbenzen bezeichnet) oder auch halogenierte Derivate davon. Je nachdem, welche Substituenten an dem Benzolring hängen, werden verschiedene Parylene unterschieden. Bei dem als Parylene N bezeichneten Grundprodukt Poly-p-xylylen hat der Benzolring nur aromatische Wasserstoffatome, d.h. jeder der vier Reste an dem Benzolring ist jeweils ein Wasserstoffatom. Daneben sind kommerziell insbeseondere auch Parylene C, Parylene D und Parylene HT erhältlich. Bei Parylene C ist eines der aromatischen Wasserstoffatome durch ein Chloratom ersetzt, bei Parylene D sind zwei der aromatischen Wasserstoffatome jeweils durch ein Chloratom ersetzt und bei Parylene HT handelt es sich um ein halogeniertes Derivat, bei welchem die Alpha-Wasserstoffatome des Dimers jeweils durch ein Fluoratom ersetzt sind.

Der Permanentmagnet oder die Permanentmagnete des magnetisch wirksamen Kerns des Rotors bestehen vorzugsweise aus Neodyn-Eisen-Bor (NdFeB) oder aus Samarium-Cobalt (SmCo) Legierungen.

Als vorteilhaft hat es sich erwiesen, wenn die metallische, direkt auf dem Rotor haftende Beschichtung mindestens eine Schicht umfasst, die aus Nickel oder aus Gold oder aus Rhodium besteht.

Ein besonders guter Schutz lässt sich erzielen, wenn die metallische Beschichtung eine Mehrzahl, insbesondere mindestens drei, Schichten umfasst, die übereinander angeordnet sind, wobei die innerste Schicht direkt auf einer Oberfläche des Permanentmagneten vorgesehen ist und vorzugsweise aus Nickel besteht. Nickel ist insbesondere deshalb bevorzugt, weil Nickel auf NdFeB basierten Legierungen wie auch auf SmCo basierten Legierungen gut haftet. Als äusserste metallische Schicht wird ebenfalls vorzugsweise Nickel gewählt, da auch Parylene gut auf Nickel haften, insbesondere besser als auf Edelmetallen wie auf Gold oder auf Rhodium.

In einer bevorzugten Ausführungsform umfasst die metallische Beschichtung genau drei Schichten, die übereinander angeordnet sind, wobei die innerste Schicht und die äusserste Schicht jeweils aus Nickel bestehen, und wobei die dazwischen liegende mittlere Schicht vorzugsweise aus Kupfer, oder aus Gold oder aus Rhodium besteht.

Bei der mehrschichtigen metallischen Beschichtung wird zunächst die innerste Schicht auf einer Oberfläche des Permanentmagneten aufgebracht. Anschliessend wird die mittlere Schicht aufgebracht, mit welcher beispielsweise Lunker, Haarrisse oder andere Gefügefehler in der innersten Beschichtung aufgefüllt werden können. Die mittlere Schicht bildet dann eine besonders ebene und glatte Basis für die äusserste Schicht. Vorzugsweise wird die metallische Beschichtung mittels Galvanotechnik (Elektroplattieren) oder mittels stromloser Metallabscheidung (aussenstromfreie chemische Abscheidung) auf der Oberfläche des Permanentmagneten abgeschieden.

Für den Fall, dass die metallische Beschichtung drei Schichten umfasst, sind die folgenden Schichtkombinationen besonders bevorzugt, wobei die Reihenfolge jeweils von innen - also von der Oberfläche des Permanentmagneten - nach aussen angegeben ist: Nickel (Ni), Kupfer (CU), Nickel (Ni) oder Nickel, Gold, Nickel oder Nickel, Rhodium (Rh), Nickel. Falls die metallische Beschichtung nur aus einer Schicht besteht, so ist diese bevorzugt aus Nickel oder aus Gold oder aus Rhodium.

Die Gesamtdicke der metallischen Beschichtung ist vorzugsweise 30 bis 100 Mikrometer und besonders bevorzugt 50 bis 60 Mikrometer.

Bezüglich der Ummantelung ist es bevorzugt, wenn die Ummantelung aus einem Perfluoralkoxy-Polymer (PFA) besteht oder aus Ethylenchlortrifluorethylen (ECTFE) oder aus Polyvinylidenfluorid (PVDF). Diese thermoplastisch verarbeitbaren Fluoropolymere haben neben ihrer Beständigkeit gegen Säuren insbesondere den Vorteil, dass sie spritzgiessbar und schweissbar sind, beispielsweise mittels Infrarot-Schweissens. Dies ist vorteilhaft für die Herstellung des Rotors.

Vorzugsweise umfasst die Ummantelung aus dem Fluoropolymer mindestens zwei Teile, die miteinander verschweisst werden, wobei hierfür das Infrarot-Schweissen bevorzugt ist. Um insbesondere beim Schweissprozess die Kunststoffbeschichtung aus Parylene vor einem zu grossen Wärmeeintrag zu schützen, ist es eine vorteilhafte Massnahme, wenn zwischen der Kunststoffbeschichtung und der Ummantelung eine Wärmeschutzfolie vorgesehen ist, die vorzugsweise eine Polyimid-Folie ist. Hierfür ist beispielsweise das unter dem Handelsnamen Kapton erhältliche Material geeignet.

Gemäss einer bevorzugten Ausgestaltung besteht die Kunststoffbeschichtung aus einem fluorierten Parylene, vorzugsweise aus aliphatisch fluorierten Parylene. Heutzutage sind insbesondere zwei Varianten von fluorierten Parylene kommerziell erhältlich, nämlich die aliphatisch fluorierte Variante, die als Parylene AF4 bezeichnet wird, und die aromatisch fluorierte Variante, die als Parylene VT4 bezeichnet wird. Bei aliphatisch fluoriertem Parylene handelt es sich um eine Variante, bei der in den aliphatischen Kohlenstoffbindungen zwischen den Benzolringen die beiden Wasserstoffatome durch zwei Fluoratome ersetzt sind. Dazu werden für die Herstellung des Parylenes die Alpha-Wasserstoffatome des Dimers durch Fluoratome ersetzt. Bei der aromatisch fluorierten Variante sind die aromatischen Wasserstoffatome jeweils durch ein Fluoratom ersetzt, d.h. jeder der vier Reste an dem Benzolring ist jeweils ein Fluoratom.

Fluoriertes Parylene und insbesondere aliphatisch fluoriertes Parylene, hat den Vorteil, dass es eine hohe thermische Stabilität aufweist, also sehr hochtemperaturbeständig ist, und zumindest kurzfristig Temperaturen von bis zu 450° ausgesetzt werden kann, ohne dass dabei Degradationserscheinungen auftreten. Selbstverständlich kann auch bei der Verwendung von fluoriertem Parylene zusätzlich noch die Wärmeschutzfolie aus Polyimid zwischen der Kunststoffbeschichtung aus Parylene und der Ummantelung vorgesehen werden.

Vorzugsweise umschliesst die metallische Beschichtung den magnetisch wirksamen Kern vollständig, das heisst der gesamte magnetisch wirksame Kern ist vollständig in die metallische Beschichtung eingeschlossen. Gemäss einem ersten Ausführungsbeispiel besteht der magnetisch wirksame Kern des Rotors nur aus einem Permanentmagneten, beispielsweise aus einem permanentmagnetischen Ring. In diesem Fall ist jede Oberfläche des Permanentmagneten vollständig mit der metallischen Beschichtung versehen, sodass der gesamte Permanentmagnet vollständig mit der metallischen Beschichtung beschichtet ist, also vollständig von der metallischen Beschichtung umgeben bzw. umkapselt ist.

Auch ist es bevorzugt, wenn die Kunststoffbeschichtung den magnetisch wirksamen Kern vollständig umschliessst. Üblicherweise werden Kunststoffbeschichtungen aus Parylen mittels Abscheidung aus der Dampfphase als Polymerschicht auf dem zu beschichtenden Substrat hergestellt. Daher kann beispielsweise der magnetisch wirksame Kern des Rotors bzw. der Permanentmagnet zunächst mit der metallischen Beschichtung versehen werden, und auf dieser metallischen Beschichtung wird dann die Kunststoffbeschichtung aus Parylene abgeschieden.

Eine bevorzugte Ausgestaltung besteht darin, dass die metallische Beschichtung unmittelbar auf jedem Permanentmagneten vorgesehen ist, und jeder Permanentmagnet vollständig von der unmittelbar auf ihm vorgesehenen metallischen Beschichtung umschlossen ist.

Ferner ist es bevorzugt, wenn die Kunststoffbeschichtung unmittelbar auf der metallischen Beschichtung vorgesehen ist, und wenn jede metallische Beschichtung vollständig von der unmittelbar auf ihr vorgesehenen Kunststoffbeschichtung umschlossen ist.

Wie bereits erwähnt besteht in einem ersten Ausführungsbeispiel der magnetisch wirksame Kern aus einem Permanentmagneten, wobei der Permanentmagnet vorzugsweise einstückig und insbesondere bevorzugt ringförmig ausgestaltet ist.

Gemäss einer bevorzugten Ausgestaltung weist die Ummantelung ein topfförmiges Gehäuseteil auf, welches den magnetisch wirksamen Kern aufnimmt, sowie einen Deckel, welcher mit dem Gehäuseteil verschweisst ist, wobei das topfförmige Gehäuseteil vorzugsweise so ausgestaltet ist, dass zwischen dem magnetisch wirksamen Kern und dem Gehäuseteil ein Luftspalt existiert. Ist der magnetisch wirksame Kern mit der metallischen Beschichtung und mit der Kunststoffbeschichtung versehen, so hat dieser Luftspalt in radialer Richtung eine Breite von beispielsweise etwa 0.1 mm zwischen der Wandung des Gehäuseteil und dem beschichteten magnetisch wirksamen Kern. In axialer Richtung, also am Boden des topfförmigen Gehäuseteils oder am Deckel ist ebenfalls ein Luftspalt vorgesehen, der in axialer Richtung vorzugsweise eine Breite von etwa 0,5 - 1 mm hat. Durch die Erfindung wird ferner eine Rotationsmaschine, insbesondere Zentrifugalpumpe oder Mischvorrichtung, zum Einwirken auf ein Fluid vorgeschlagen, mit einem magnetisch lagerbaren Rotor und mit einem Stator, mit welchem der Rotor im Betriebszustand berührungslos magnetisch zur Rotation um eine axiale Richtung antreibbar ist, wobei der Rotor magnetisch gelagert ist und erfindungsgemäss ausgestaltet ist.

Vorzugsweise ist die Rotationsmaschine als lagerloser Motor ausgestaltet, bei welchem der Stator als Lager- und Antriebsstator ausgestaltet ist, mit welchem der Rotor im Betriebszustand berührungslos magnetisch antreibbar und zumindest radial bezüglich des Stators berührungslos magnetisch lagerbar ist.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen (teilweise im Schnitt):
- Fig. 1:: eine Schnittdarstellung eines ersten Ausführungsbeispiels einer erfindungsgemässen Rotationsmaschine mit einem ersten Ausführungsbeispiel eines erfindungsgemässen Rotors,
- Fig. 2:: eine Schnittdarstellung des magnetisch lagerbaren Rotors aus Fig. 1,
- Fig. 3:: eine vergrösserte Darstellung des Details I aus Fig. 2,
- Fig. 4:: eine Schnittdarstellung eines zweiten Ausführungsbeispiels einer erfindungsgemässen Rotationsmaschine mit einem zweiten Ausführungsbeispiel eines erfindungsgemässen Rotors,
- Fig. 5:: eine Schnittdarstellung des magnetisch lagerbaren Rotors aus Fig. 2,
- Fig. 6:: einen Schnitt durch den Rotor aus Fig. 5 entlang der Schnittlinie VI-VI in Fig. 5;
- Fig. 7:: eine schematische Schnittdarstellung einer ersten Variante für den Rotor aus Fig. 5,
- Fig. 8:: eine schematische Schnittdarstellung einer zweiten Variante für den Rotor aus Fig. 5, und
- Fig. 9:: eine schematische Schnittdarstellung einer dritten Variante für den Rotor aus Fig. 5.

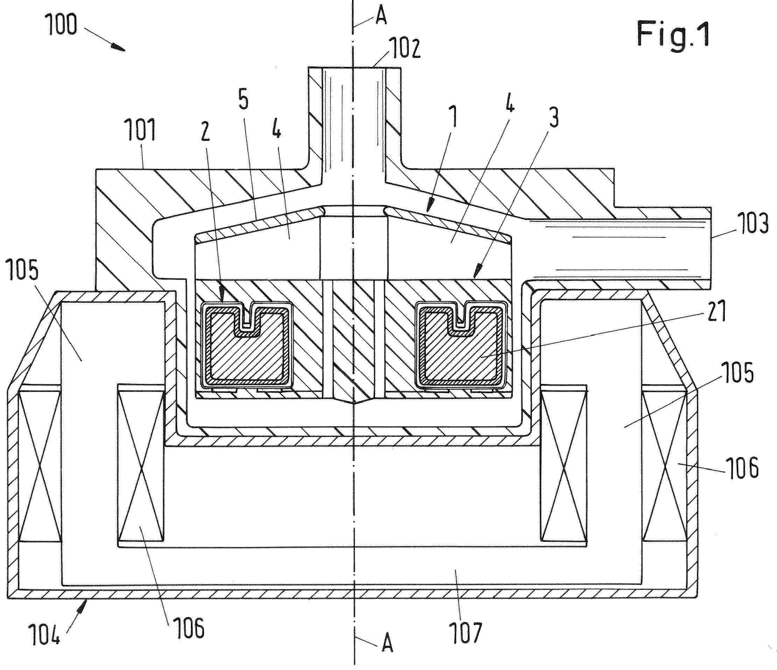

Fig. 1 zeigt in einer Schnittdarstellung ein erstes Ausführungsbeispiel einer erfindungsgemässen Rotationsmaschine mit einem ersten Ausführungsbeispiel eines erfindungsgemässen Rotors. Die Rotationsmaschine ist hier als Zentrifugalpumpe ausgestaltet, die gesamthaft mit dem Bezugszeichen 100 bezeichnet ist. Derartige Zentrifugalpumpen 100 können insbesondere in der Halbleiterindustrie zum Fördern von säurehaltigen Fluiden oder chemisch aggressiven Fluiden eingesetzt werden. Solche Fluide können beispielsweise Schwefelsäure (H₂SO₄), Phosphorsäure (H₃PO₄), Salzsäure (HCl), Flusssäure (HF), Salpetersäure (HNO₃), Ozon (O₃), oder auch Mischungen enthalten, beispielsweise aus Schwefelsäure (H₂SO₄) und Wasserstoffperoxid (H₂O₂) oder aus Schwefelsäure (H₂SO₄) und Salpetersäure (HNO₃).

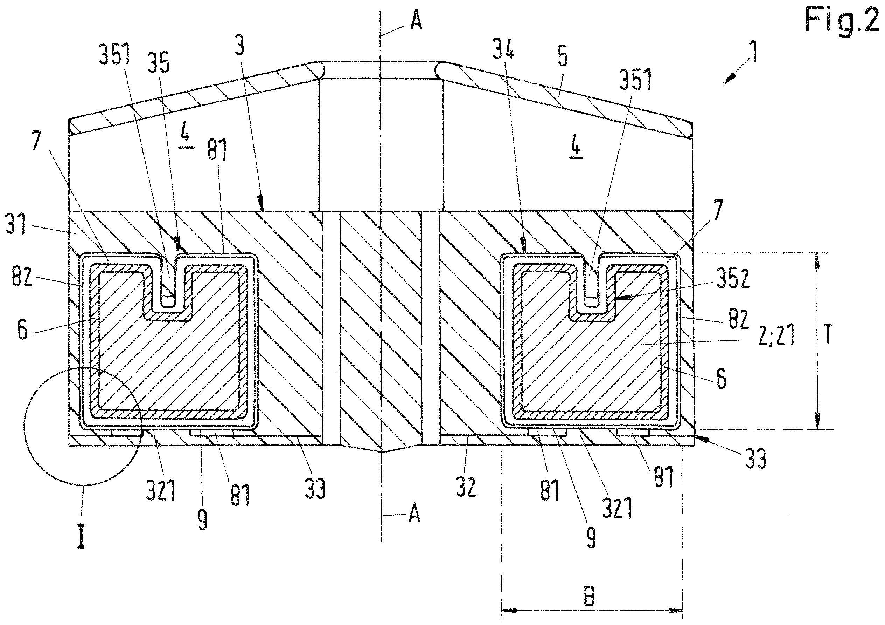

Die Zentrifugalpumpe 100 umfasst ein Pumpengehäuse 101 mit einem Einlass 102 und einem Auslass 103 für das zu fördernde Fluid. In dem Pumpengehäuse 101 ist ein erstes Ausführungsbeispiel eines erfindungsgemässen magnetisch lagerbaren Rotors vorgesehen, welcher gesamthaft mit dem Bezugszeichen 1 bezeichnet ist. Zum besseren Verständnis zeigt Fig. 2 noch eine Schnittdarstellung des magnetisch lagerbaren Rotors 1 aus Fig. 1. Der Rotor 1 hat einen magnetisch wirksamen Kern 2, der mindestens einen Permanentmagneten 21 umfasst, um die Rotation des Rotors 1 um eine Solldrehachse anzutreiben, welche eine axiale Richtung A festlegt. Eine Richtung senkrecht zur axialen Richtung A wird als radiale Richtung bezeichnet.

In dem ersten Ausführungsbeispiel besteht der magnetisch wirksame Kern 2 nur aus dem Permanentmagneten 21, der hier als ringförmiger Permanentmagnet 21 ausgestaltet ist. Vorzugsweise ist der ringförmige Permanentmagnet 21 einstückig. Es ist aber auch möglich, dass der Permanentmagnet 21 mehrere Segmente umfasst, die sich zu einem Ring ergänzen. Im Betriebszustand ist der ringförmige Permanentmagnet 21 so angeordnet, dass er sich um die Solldrehachse herum erstreckt.

Der Rotor 1 umfasst ferner eine Ummantelung 3 aus einem thermoplastisch verarbeitbaren Fluorpolymer, welche den magnetisch wirksamen Kern 2 vollständig umschliesst, sodass der magnetisch wirksame Kern 2 vollständig in der Ummantelung 3 eingebettet und von dieser umkapselt ist. Die Ummantelung 3 besteht aus einem Perfluoralkoxy-Polymer (PFA). Alternativ kann die Ummantelung 3 auch aus Ethylenchlortrifluorethylen (ECTFE) oder aus Polyvinylidenfluorid (PVDF) bestehen. Auf der Ummantelung 3 ist eine Mehrzahl von Flügeln 4 vorgesehen, mit welchen das Fluid vom Einlass 102 zum Auslass 103 gefördert werden kann. Ferner ist eine die Flügel 4 überdeckende Deckplatte 5 vorgesehen, welche die Flügel 4 auf ihrer der Ummantelung 3 abgewandten Seite überdeckt.

Das Pumpengehäuse 101 ist vorzugsweise aus einem Kunststoff gefertigt. Dies kann der gleich Kunststoff sein, aus welchem die Ummantelung 3 besteht oder auch ein anderer Kunststoff. Bevorzugt besteht das Pumpengehäuse 101, zumindest im Wesentlichen, aus einem Fluoropolymer. Dabei sind für das Pumpengehäuse 101 auch solche Kunststoffe oder Polymere, insbesondere Fluoroploymere geeignet, die nicht thermoplastisch verarbeitbar sind, die also insbesondere nicht schweissbar oder spritzgiessbar sind.

Das Pumpengehäuse 101 ist so ausgestaltet, dass es in einen Stator 104 einsetzbar ist, mit welchem der Rotor 1 berührungslos magnetisch zur Rotation um die axiale Richtung A antreibar ist und zumindest in radialer Richtung berührungslos magnetisch lagerbar ist. Der Rotor 1 ist somit als Integralrotor 1 ausgestaltet, der sowohl den Pumpenrotor 1 bildet als auch den Rotor 1 des elektromagnetischen Drehantriebs.

Der Stator 104 weist in an sich bekannter Weise mehrere Spulenkernen 105 auf, die Spulen oder Wicklungen 106 tragen, mit welchem der Rotor 1 im Betriebszustand berührungslos magnetisch antreibbar ist. Die Spulenkerne 105 sind über einen Rückschluss 107 miteinander verbunden, der vorzugsweise aus Eisen besteht. Bei dem ersten Ausführungsbeispiel ist der Stator 104 als Lager- und Antriebsstator 104 ausgestaltet, mit welchem der Rotor 1 im Betriebszustand berührungslos magnetisch antreibbar und bezüglich des Stators 104 berührungslos magnetisch lagerbar ist. Der Stator 104 und der Rotor 1 bilden somit einen elektromagnetischen Drehantrieb, der vorzugsweise nach dem Prinzip des lagerlosen Motors ausgestaltet ist.

Bei einem lagerlosen Motor ist der Rotor 1 berührungslos magnetisch antreibbar und berührungslos magnetisch bezüglich des Stators 104 lagerbar. Dazu ist der Stator 104 als Lager- und Antriebsstator ausgestaltet, mit welchem der Rotor 1 im Betriebszustand berührungslos magnetisch um die Solldrehachse antreibbar - also in Rotation versetzbar- und bezüglich des Stators 104 berührungslos magnetisch lagerbar ist.

Der lagerlose Motor ist dem Fachmann mittlerweile hinlänglich bekannt, sodass eine detaillierte Beschreibung seiner Funktion nicht mehr notwendig ist. Mit dem Begriff lagerloser Motor ist gemeint, dass der Rotor 1 vollkommen magnetisch gelagert ist, wobei keine separaten Magnetlager vorgesehen sind. Der Stator 104 ist dazu als Lager- und Antriebsstator 104 ausgestaltet, er ist also sowohl Stator des elektrischen Antriebs als auch Stator der magnetischen Lagerung. Dabei umfasst der Stator 104 die Wicklungen 106, mit denen sich ein magnetisches Drehfeld erzeugen lässt, welches zum einen ein Drehmoment auf den Rotor 1 ausübt, das dessen Rotation bewirkt, und welches zum anderen eine beliebig einstellbare Querkraft auf den Rotor 1 ausübt, sodass dessen radiale Position -also seine Position in der zur axialen Richtung A senkrechten radialen Ebene- aktiv steuerbar bzw. regelbar ist. Somit sind zumindest drei Freiheitsgrade des Rotors 1 aktiv regelbar. Bezüglich seiner axialen Auslenkung in axialer Richtung A ist der Rotor 1 zumindest passiv magnetisch, das heisst nicht ansteuerbar, durch Reluktanzkräfte stabilisiert. Auch bezüglich der verbleibenden zwei Freiheitsgrade, nämlich Verkippungen bezüglich der zur Solldrehachse senkrechten radialen Ebene kann der Rotor 1 - je nach Ausführungsform - ebenfalls passiv magnetisch stabilisiert sein.

Beim lagerlosen Motor wird im Unterschied zu klassischen Magnetlagern die magnetische Lagerung und der Antrieb des Motors über elektromagnetische Drehfelder realisiert, deren Summe zum einen ein Antriebsmoment auf den Rotor 1 erzeugen, sowie eine beliebig einstellbare Querkraft, mit welcher die radiale Position des Rotors 1 regelbar ist. Diese Drehfelder können entweder separat - also mit unterschiedlichen Spulen -, generiert werden, oder die Drehfelder können durch rechnerische Überlagerung der benötigten Ströme oder Spannungen und dann mithilfe eines einzigen Spulensystems generiert werden. Charakteristisch ist dabei für den lagerlosen Motor, dass sich die Antriebsfunktion apparativ nicht von der Lagerfunktion trennen lässt. Dies ist ein wesentlicher Unterschied zu Ausgestaltungen mit separaten Magnetlagern, bei welchen die Antriebsfunktion von der Lagerfunktion getrennt ist.

Zur Platzierung des Pumpengehäuses 101 mit dem Rotor 1 im Stator 104 weist der Stator 104 eine im wesentlichen zylindrischen Ausnehmung auf, in welche das Pumpengehäuse 101 einsetzbar ist, sodass die Spulenkerne 105 mit den Wicklungen 106 den Rotor 1 umgeben. Der Rotor 1 ist im Betriebszustand zentral zwischen den von den Spulenkernen 105 gebildeten Statorpolen angeordnet. Der Rotor 1 und der Stator 104 stellen hier also einen elektromagnetischen Drehantrieb dar, welcher nach dem Prinzip des Innenläufers ausgestaltet ist.

Bei dem hier beschriebenen Ausführungsbeispiel ist die Zentrifugalpumpe 100, genauer gesagt der von dem Stator 104 und dem Rotor 1 gebildete Drehantrieb als sogenannter Tempelmotor ausgestaltet. Das Charakteristische einer Ausgestaltung als Tempelmotor ist es, dass der Stator 104 eine Mehrzahl von separaten Spulenkernen 105 umfasst, von denen jeder L-förmig mit einen Längsschenkel und einem Querschenkel ausgestaltet ist. Jeder Längsschenkel erstreckt sich von einem ersten Ende in axialer Richtung A bis zu einem zweiten Ende, von welchem sich der Querschenkel in radialer Richtung nach innen erstreckt und einen Statorpol bildet. Alle ersten Enden der Längsschenkel - gemäss der Darstellung in Fig. 1 sind dies die unteren Enden - sind durch den Rückschluss 107 miteinander verbunden. Dabei umfasst der Rückschluss 107 mehrere Segmente, von denen jedes jeweils das erste Ende eines Spulenkerns 105 mit dem ersten Ende des benachbarten Spulenkerns 105 verbindet. Dabei sind die individuellen Spulenkerne 105 vorzugsweise so angeordnet, dass sie den Rotor 1 kreisförmig umgeben und auf diesem Kreis äquidistant angeordnet sind. Im Betrieb ist der Rotor 1 zwischen den radial nach innen gerichteten Statorpolen berührungslos magnetisch gelagert. Dabei ist der magnetisch wirksame Kern 2 des Rotors bezüglich der axialen Richtung A auf der gleichen Höhe wie die Statorpole. Die zueinander parallel ausgerichteten Längsschenkel der Spulenkerne 105, die sich alle parallel zur axialen Richtung A erstrecken, und welche den Rotor 1 umgeben, sind es, welche dem Tempelmotor seinen Namen gegeben haben, weil diese parallelen Längsschenkel an die Säulen eines Tempels erinnern.

Ein weiteres Merkmal des Tempelmotors ist es, dass die Wicklungen 106 des Stators 104 jeweils um die Längsschenkel der Spulenkerne 105 angeordnet sind und somit ausserhalb der magnetischen Rotorebene angeordnet sind, darstellungsgemäss unterhalb der magnetischen Rotorebene. Die magnetische Rotorebene ist die magnetische Mittelebene des magnetisch wirksamen Kerns 2 des Rotors 1. Dies ist diejenige Ebene senkrecht zur axialen Richtung A, in welcher der Rotor 1 bzw. der magnetisch wirksame Kern 2 des Rotors 1 im Betriebszustand gelagert wird, wenn der Rotor 1 nicht verkippt ist. In der Regel ist die magnetische Rotorebene die geometrische Mittelebene des magnetisch wirksamen Kerns 2 des Rotors 1, die senkrecht zur axialen Richtung A liegt.

Vorzugsweise sind die Wicklungen 106 vollständig unterhalb des magnetisch wirksamen Kerns 2 angeordnet. Die Wicklungen 106 sind also nicht in der Ebene angeordnet, in welcher der Rotor 1 im Betriebszustand angetrieben und gelagert wird. Im Unterschied zu anderen elektromagnetischen Drehantrieben, bei welchen die Wicklungen des Stators so angeordnet sind, dass die Spulenachsen jeweils in der magnetischen Rotorebene liegen, also in der Ebene, in welcher der Rotor gelagert wird, sind beim Tempelmotor die Wicklungen 106 des Stators 104 so angeordnet, dass die Achsen der Wicklungen 106 senkrecht auf der magnetischen Rotorebene stehen und somit parallel zur axialen Richtung A ausgerichtet sind.

Es versteht sich natürlich, dass die Erfindung nicht auf solche Ausgestaltungen als Tempelmotor beschränkt ist. Es sind auch zahlreiche andere Ausgestaltungen des Stators 104 möglich. Wesentlich ist nur, dass der Rotor 1 im Betriebszustand berührungslos magnetisch zur Rotation um die axiale Richtung antreibbar ist.

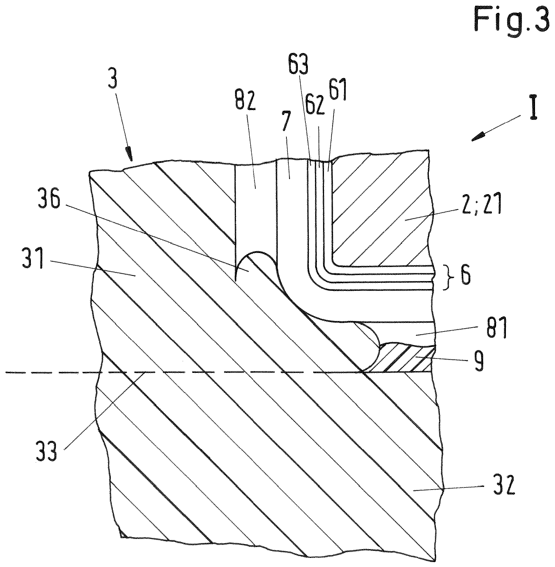

Im Folgenden wird nun der Rotor 1 anhand der Fig. 2 und der Fig. 3 näher erläutert, wobei Fig. 3 eine vergrösserte Darstellung des Details I aus Fig. 2 ist.

Wie bereits erwähnt, besteht bei dem ersten Ausführungsbeispiel der magnetisch wirksame Kern 2 aus dem ringförmigen Permanentmagneten 21, d.h. der magnetisch wirksame Kern 2 ist hier identisch mit dem Permanentmagneten 21. Der Permanentmagnet 21 besteht vorzugsweise aus einer Neodyn-Eisen-Bor (NdFeB) Legierung, kann aber auch aus einem anderen Material bestehen, welches typischerweise für Permanentmagnete verwendet wird, beispielsweise eine Samarium-Cobalt (SmCo) Legierung.

Der Permanentmagnet 21 weist eine metallische Beschichtung 6 auf, die insbesondere als Schutz gegen gasförmige Komponenten säurehaltiger oder chemisch aggressiver Substanzen dient, und ein Diffundieren solcher Komponenten zum Permanentmagneten 21 so gut wie möglich verhindern oder zumindest deutlich reduzieren soll. Die metallische Beschichtung 6, die weiter hinten noch näher erläutert wird, ist unmittelbar auf der Oberfläche des Permanentmagneten 21 vorgesehen, wobei sämtliche Oberflächen des Permanentmagneten 21 mit der metallischen Beschichtung 6 versehen sind, derart, dass der Permanentmagnet 21 vollständig von der metallischen Beschichtung 6 umschlossen ist. Die metallische Beschichtung 6 stellt eine hermetische Umkapselung des Permanentmagneten 21 dar, welche verhindert, dass irgendwelche Substanzen direkt mit dem Permanentmagneten 21 in Kontakt kommen.

Vorzugsweise wird die metallische Beschichtung mittels Galvanotechnik (Elektroplattieren) oder mittels stromloser Metallabscheidung (aussenstromfreie chemische Abscheidung) direkt auf jeder Oberfläche des Permanentmagneten 21 abgeschieden.

Unmittelbar auf der metallischen Beschichtung 6 ist eine Kunststoffbeschichtung 7 vorgesehen, die aus einem Polymer besteht, das zur Familie der Parylene gehört. Insbesondere sind für die Kunststoffbeschichtung die Parylene geeignet, die unter den Handelsnamen Parylene N, Parylene C und Parylene D kommerziell erhältlich sind. Parylene N ist das Grundprodukt dieser Polymer-Familie. Parylene N ist Poly(Para-Xylylen), ein vollständig lineares Polymer. Parylene C und Parylene D sind Varianten, die aus dem gleichen Rohmaterial wie Parylene N hergestellt werden, wobei bei Parylene C eines der aromatischen Wasserstoffatome durch ein Chloratom ersetzt ist, und bei Parylene D sind zwei der aromatischen Wasserstoffatome durch jeweils ein Chloratom ersetzt. Insbesondere kann die Kunststoffbeschichtung 7 auch aus einem fluorierten Parylene bestehen und vorzugsweise aus aliphatisch fluorierten Parylene. Bei diesem Derivat, das als Parylene AF4 bezeichnet wird, und das beispielsweise unter dem Handelsnamen Parylene HT kommerziell erhältlich ist, sind in den aliphatischen Kohlenstoffbindungen zwischen den Benzolringen die beiden Wasserstoffatome durch zwei Fluoratome ersetzt.

Die Herstellung einer Kunststoffbeschichtung 7, die aus einem Parylene besteht, ist an sich Stand der Technik und bedarf daher keiner näheren Erläuterung. Üblicherweise werden Parylene-Beschichtungen durch chemische Gasphasenabscheidung erzeugt. Zunächst wird ein geeignetes Dimer, beispielsweise Di-Para-Xylylen (oder ein halogeniertes, z. B. fluoriertes Derivat) verdampft und durch eine Hochtemperaturzone geleitet (Pyrolyse), wodurch ein Monomer entsteht (beispielsweise Para-Xylylen). Die Monomere polymerisieren dann auf der zu beschichtenden Oberfläche, hier also auf der metallischen Beschichtung 6, welche den Permanentmagneten 21 umschliesst, wodurch sich die Parylene-Beschichtung als Kunststoffbeschichtung 7 ausbildet.

Auch hier ist es bevorzugt, dass die Kunststoffbeschichtung 7 die metallische Beschichtung 6 und damit den Permanentmagneten 21 vollständig umschliesst. D. h. die Kunststoffbeschichtung 7 bildet eine zweite Hülle um den Permanentmagneten 21, welche die metallische Beschichtung 6 vollständig umgibt. Die Kunststoffbeschichtung 7 ist unmittelbar auf der metallischen Beschichtung 6 vorgesehen. Dazu wird bei der Herstellung der Kunststoffbeschichtung 7 die metallische Beschichtung 6 als Substrat verwendet, auf welchem sich das Parylene-Polymer abscheidet.

Es ist bevorzugt, die Kunststoffbeschichtung 7 in mehreren sukzessiven Beschichtungsvorgängen zu generieren, in denen jeweils eine Parylene-Schicht auf dem Substrat abgeschieden wird. Dabei wird der mit der metallischen Beschichtung 6 versehene Permanentmagnet 21 zwischen den Beschichtungsvorgängen mindestens einmal gewendet, damit auch die Auflagepunkte, auf welchen der Permanentmagnet 21 bei einem Beschichtungsvorgang aufliegt, beim folgenden Beschichtungsvorgang überdeckt wird. Zudem lassen sich durch die Mehrfachbeschichtung homogenere und dichtere Beschichtungen herstellen und auch Vertiefungen im Permanentmagneten 21 bzw. in der metallischen Beschichtung 6 homogen beschichten. Insbesondere werden mindestens drei Beschichtungsvorgänge durchgeführt, in welchen jeweils eine Parylene-Schicht erzeugt wird, sodass die fertiggestellte Kunststoffbeschichtung 7 mindestens drei übereinanderliegende Parylene-Schichten umfasst. Die Gesamtdicke der Kunststoffbeschichtung 7 ist vorzugsweise mindestens 40 Mikrometer, besonders bevorzugt mindestens 60 Mikrometer und speziell bevorzugt etwa 80 Mikrometer oder mehr.

Der Rotor 1 umfasst ferner die Ummantelung 3, welche den Permanentmagneten 21 sowie die den Permanentmagneten 21 umschliessende metallische Beschichtung 6 sowie die Kunststoffbeschichtung 7 vollständig umschliesst. Die Ummantelung 3 bildet also ein vollständig geschlossenes Gehäuse für den Permanentmagneten 21 und die auf diesem vorgesehenen Beschichtungen 6 und 7. Die Ummantelung 3 umfasst ein topfförmiges Gehäuseteil 31, welches den Permanentmagneten 21 mit der metallischen Beschichtung 6 und der Kunststoffbeschichtung 7 aufnimmt, sowie einen Deckel 32, welcher das topfförmige Gehäuseteil 31 verschliesst, und welcher mit dem topfförmigen Gehäuseteil 31 entlang einer Schweissnaht 33 verschweisst ist. Für das Verschweissen des Deckels 32 mit dem Gehäuseteil 31 ist das Verfahren des Infrarot-Schweissens bevorzugt.

Wie bereits erwähnt, besteht die Ummantelung 3 aus einem thermoplastisch verarbeitbarem Fluoropolymer, das insbesondere schweissbar ist. Besonders bevorzugt besteht die Ummantelung 3 aus PFA. Ebenfalls bevorzugt kann die Ummantelung 3 auch aus ECTFE oder aus PVDF bestehen.

Für die Ummantelung 3 sind daher nicht-schweissbare Kunststoffe bzw. nicht-schweissbare Fluoropolymere, wie beispielsweise das unter dem Handelsnamen Teflon bekannte Polytetrafluorethylen (PTFE) nicht besonders geeignet. Nur schweissbare oder mit PFA lötbare PTFE Mischungen, welche üblicherweise einen geringen Anteil von PFA enthalten, sind eventuell ebenfalls einsetzbar.

Natürlich kann das Pumpengehäuse 101 aus einem nicht-schweissbaren Kunststoff, insbesondere aus einem nicht-schweissbaren Fluoropolymer, beispielsweise PTFE bestehen.

Das topfförmige Gehäuseteil 31, welches den Permanentmagneten 21 aufnimmt, umfasst eine im Wesentlichen ringförmige Kavität 34, in welche der Permanentmagnet 21, welcher mit der metallischen Beschichtung 6 und der Kunststoffbeschichtung 7 versehen ist, eingelegt wird. Die Tiefe T der Kavität 34, womit ihre Erstreckung in axialer Richtung A gemeint ist, ist etwas grösser als die Erstreckung des Permanentmagneten 21 - einschliesslich der metallischen Beschichtung 6 und der Kunststoffbeschichtung 7 - in axialer Richtung A, sodass das Gehäuseteil 31 bezüglich der axialen Richtung A über den Permanentmagneten 21 und über die Kunststoffbeschichtung 7 hinausragt - in Fig. 2 und Fig. 3 darstellungsgemäss nach unten. Wenn der Deckel 32 also auf das Gehäuseteil 31 aufgelegt ist, oder mit diesem verschweisst ist, existiert zwischen der Kunststoffbeschichtung 7, welche die metallische Beschichtung 6 und den Permanentmagneten 21 umschliesst, und dem Deckel 32 sowie dem Boden der Kavität 34 jeweils ein axialer Luftspalt 81. Die Erstreckung des axialen Luftspalts 81 in axialer Richtung A ist vorzugsweise jeweils etwa 0.5 mm - 1 mm.

In radialer Richtung weist die Kavität 34 eine Breite B auf, welche so bemessen ist, dass zwischen der Kunststoffbeschichtung 7, welche die metallische Beschichtung 6 und den Permanentmagneten 21 umschliesst, und der Ummantelung 3 ein radialer Luftspalt 82 existiert. Der radiale Luftspalt 82 hat typischerweise eine Breite (in radialer Richtung) von weniger als einem halben Millimeter und ist beispielsweise etwa 01. mm.

Damit darstellungsgemäss (Fig. 2) sowohl oberhalb als auch unterhalb des Permanentmagneten 21 bzw. der Kunststoffbeschichtung 7 jeweils ein axialer Luftspalt 81 existiert, weist der Deckel 32 eine Erhebung 321 auf, welche in axialer Richtung A aus dem Deckel 32 herausragt. Auf dieser Erhebung 321 kann sich die Kunststoffbeschichtung 7 mit der metallischen Beschichtung 6 und dem Permanentmagneten 21 abstützen, sodass seitlich neben der Erhebung 321 der axiale Luftspalt 81 ausgebildet ist. Die Erhebung 321 kann beispielsweise als ringförmige Erhebung 321 ausgestaltet sein, die konzentrisch zur Solldrehachse angeordnet ist, und die in radialer Richtung bezüglich des Permanentmagneten 21 zentriert ist.

Damit sich der magnetisch wirksame Kern 2, hier also der Permanentmagnet 21, relativ zu der Ummantelung 3 nicht drehen kann, sondern bei seiner Rotation die Ummantelung 3 sowie die Flügel 4 und die Deckplatte 5 mitnimmt, sind mehrere Drehsicherungen 35 vorgesehen, mit welchen ein Drehmoment vom Permanentmagneten 21 auf die Ummantelung 3 übertragbar ist. Jede Drehsicherung 35 umfasst einen sich in axialer Richtung A erstreckenden Zapfen 351, der integraler Bestandteil des topfförmigen Gehäuseteils 31 der Ummantelung 3 ist, sowie eine in dem Permanentmagneten vorgesehene Bohrung 352, in welche der jeweilige Zapfen 351 eingreift. Dabei sind jeder Zapfen 351 und die jeweils mit dem Zapfen 351 zusammenwirkende Bohrung 352 so ausgestaltet, dass sich der Permanentmagnet 21 relativ zur Ummantelung 3 nicht drehen kann, sondern die Rotation des Permanentmagneten 21 auf die Ummantelung 3 übertragen wird. Sowohl die metallische Beschichtung 6 als auch die Kunststoffbeschichtung 7 sind auch in jeder der Bohrungen 352 vorgesehen, sodass der Permanentmagnet 21 vollständig von der metallischen Beschichtung 6 und der Kunststoffbeschichtung 7 umschlossen ist. D.h. sowohl die metallische Beschichtung 6 als auch die Kunststoffbeschichtung 7 sind zwischen jeder Bohrung 352 und dem in diese eingreifenden Zapfen 351 vorgesehen.

Wie dies in Fig. 3 dargestellt ist, umfasst die metallische Beschichtung 6 eine Mehrzahl nämlich drei metallische Schichten, die übereinander angeordnet ist. Eine innerste Schicht 61 ist direkt auf der Oberfläche des Permanentmagneten 21 vorgesehen, eine mittlere Schicht 62 ist unmittelbar auf der innersten Schicht 61 vorgesehen und eine äusserste Schicht 63 ist unmittelbar auf der mittleren Schicht 62 vorgesehen. Die drei Schichten 61, 62, 63 werden sukzessive aufgebracht, vorzugsweise mittels Galvanotechnik (Elektroplattieren) oder mittels stromloser Metallabscheidung (aussenstromfreie chemische Abscheidung). Vorzugsweise bestehen die innerste Schicht 61 und die äusserste Schicht 63 jeweils aus Nickel (Ni). Die mittlere Schicht 62 besteht vorzugsweise aus Kupfer (Cu), kann alternativ aber auch aus Gold (Au) oder Rhodium (Rh) bestehen. Die Gesamtdicke der metallischen Beschichtung ist vorzugsweise 30 bis 100 Mikrometer und besonders bevorzugt 50 bis 60 Mikrometer. Dabei hat die innerste Schicht 61 eine Dicke von etwa 10 bis 20 Mikrometer; die mittlere Schicht 62 hat eine Dicke von etwa 10 bis 20 Mikrometer; und die äusserste Schicht 63 hat eine Dicke von etwa 30 Mikrometer.

Abweichend von der Darstellung in Fig. 3 ist es natürlich auch möglich, dass die metallische Beschichtung 6 nur aus einer Schicht besteht, die dann vorzugsweise aus Ni oder aus Au oder aus Rh besteht. Auch ist es möglich, dass die metallische Beschichtung 6 aus zwei Schichten besteht, wobei dann die innere Schicht vorzugsweise aus Ni besteht und die äussere Schicht aus Au oder aus Rh. Ferner ist es möglich, dass die metallische Beschichtung 6 mehr als drei Schichten 61, 62, 63 umfasst.

Um insbesondere die Kunststoffbeschichtung 7 beim Verschweissen des Deckels 32 mit dem topfförmigen Gehäuseteil 31 vor einem zu grossen Wärmeeintrag zu schützen, welcher zu Degradationen der Kunststoffbeschichtung 7 führen könnte, ist vorzugsweise zwischen dem Deckel 32 der Ummantelung 3 und der Kunststoffbeschichtung 7 eine Wärmeschutzfolie 9 vorgesehen. Die Wärmeschutzfolie 9 ist vorzugsweise eine Polyimid-Folie, beispielsweise eine solche, die unter dem Handelsnamen Kapton kommerziell erhältlich ist. Die Wärmeschutzfolie 9 ist vorzugsweise nur zwischen der darstellungsgemässen (Fig. 2, Fig. 3) Unterseite der Kunststoffbeschichtung 7 und der Ummantelung 3 vorgesehen, also in dem Bereich der Kunststoffbeschichtung 7, welcher der Schweissnaht 33 am nächsten liegt.

Alternativ oder ergänzend zu der Wärmeschutzfolie 9 ist es eine bevorzugte Massnahme, dass die Kunststoffbeschichtung 7 aus einem fluorierten Parylene und besonders bevorzugt aus aliphatisch fluorierten Parylene besteht, das auch als Parylene AF4 bezeichnet wird. Insbesondere aliphatisch fluoriertes Parylene weist nämlich eine besonders hohe thermische Stabilität auf.

Um eine temperaturbedingte Degradation der Kunststoffbeschichtung 7 insbesondere beim Verschweissen des Deckels 32 mit dem Gehäuseteil 31 der Ummantelung zu vermeiden, sind also mehrere Varianten bevorzugt: Die Kunststoffbeschichtung 7 besteht aus einem nicht-fluorierten Parylene, beispielsweise aus Parylene N oder Parylene C oder Parylene D und es wird die Wärmeschutzfolie 9 vorgesehen. Oder die Kunststoffbeschichtung 7 besteht aus einem fluorierten Parylene, insbesondere aus aliphatisch fluorierten Parylene vom Typ Parylene AF4, und es wird keine Wärmeschutzfolie 9 vorgesehen. Oder die Kunststoffbeschichtung 7 besteht aus einem fluorierten Parylene, insbesondere aus aliphatisch fluoriertem Parylene vom Typ Parylene AF4, und es wird zusätzlich noch die Wärmeschutzfolie 9 vorgesehen.

Zur Herstellung des Rotors 1 wird vorzugsweise wie folgt vorgegangen. Zunächst wird auf den ringförmigen Permanentmagneten 21 die metallische Beschichtung 6 aufgebracht, sodass der Permanentmagnet vollständig von der metallischen Beschichtung umschlossen ist. Anschliessend wird auf der metallischen Beschichtung 6 die Kunststoffbeschichtung 7 aus einem Parylene abgeschieden, sodass die metallische Beschichtung 6 vollständig von der Kunststoffbeschichtung 7 umschlossen ist. Dann wird das topfförmige Gehäuseteil 31 bereitgestellt. Der mit der metallischen Beschichtung 6 und mit der Kunststoffbeschichtung 7 versehene Permanentmagnet 21 wird in die ringförmige Kavität 34 des Gehäuseteils 31 eingesetzt, derart, dass die Zapfen 351 in die Bohrungen 352 eingreifen. Optional wird die Wärmeschutzfolie 9 auf die dem Deckel 32 zugewandte Oberfläche der Kunststoffbeschichtung 7 aufgelegt oder auf die der Kunststoffbeschichtung zugewandte Oberfläche des Deckels 32. Das topfförmige Gehäuseteil 31 mit dem darin befindlichen Permanentmagneten 21 wird durch Auflegen des Deckels 32 abgedeckt bzw. verschlossen. Dann wird der Deckel 32 mittels Infrarot-Schweissens mit dem topfförmigen Gehäuseteil 31 verschweisst.

Auch im Hinblick auf das Verschweissen sind die Luftspalte 81, 82 vorteilhaft, denn entlang der Schweissnaht 33 kann das beim Schweissen verflüssigte Fluoropolymer, aus welchem die Ummantelung 3 besteht, in diese Luftspalte 81, 82 verdrängt werden, sodass keine Gefahr besteht, dass die Kunststoffbeschichtung 7 durch verdrängtes Material beschädigt wird. Das beim Schweissen verdrängte Polymermaterial ist in Fig. 3 durch die Wulst 36 dargestellt.

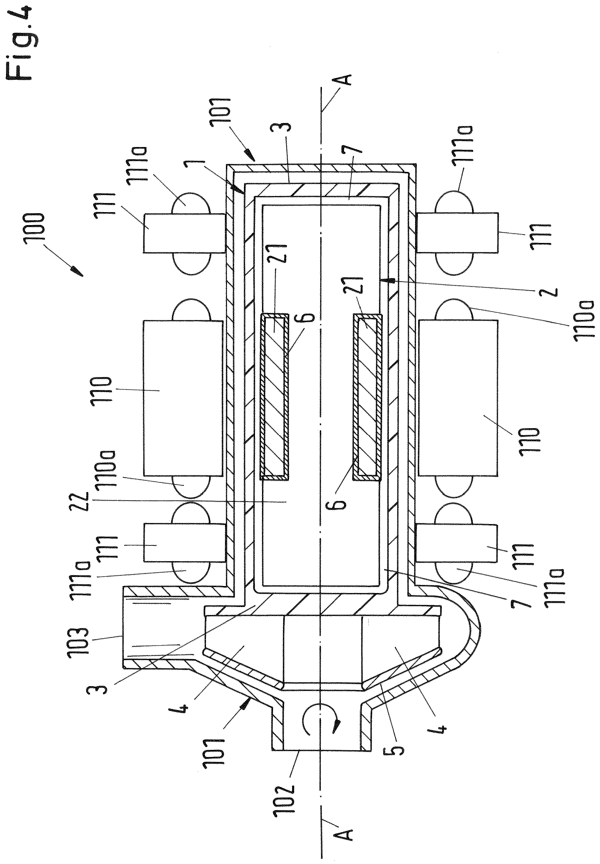

Fig. 4 zeigt eine Schnittdarstellung eines zweiten Ausführungsbeispiels einer erfindungsgemässen Rotationsmaschine mit einem zweiten Ausführungsbeispiel eines erfindungsgemässen Rotors. Bei der folgenden Beschreibung des zweiten Ausführungsbeispiels der Rotationsmaschine und des zweiten Ausführungsbeispiels des Rotors wird nur auf die Unterschiede zu dem ersten Ausführungsbeispiel der Rotationsmaschine und zu dem ersten Ausführungsbeispiels des Rotors eingegangen. Ansonsten gelten die Erläuterungen des ersten Ausführungsbeispiels des Rotors bzw. der Rotationsmaschine in gleicher Weise oder in sinngemäss gleicher Weise auch für das zweite Ausführungsbeispiel des Rotors bzw. der Rotationsmaschine. Bei dem zweiten Ausführungsbeispiel des Rotors bzw. der Rotationsmaschine sind gleiche Teile oder von der Funktion her gleichwertige Teile mit den gleichen Bezugszeichen bezeichnet wie bei dem ersten Ausführungsbeispiel des Rotors bzw. der Rotationsmaschine.

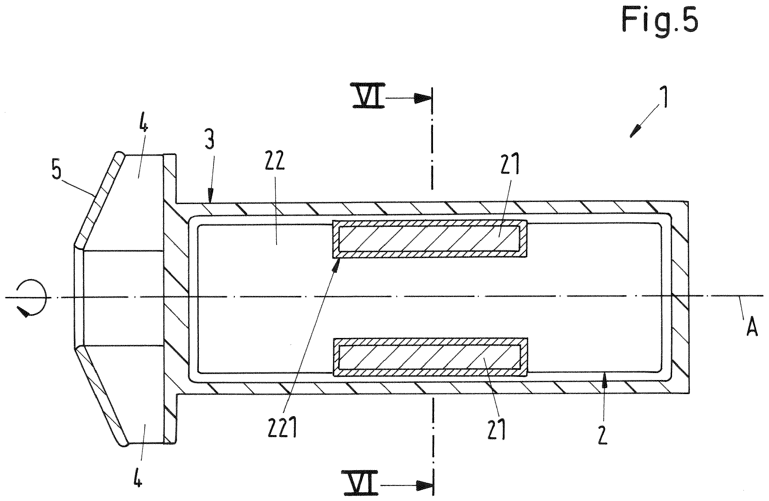

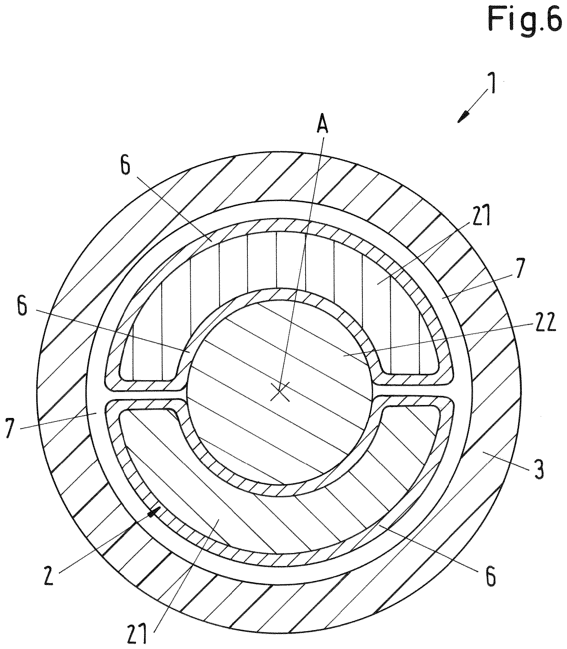

Auch das zweite Ausführungsbeispiel der erfindungsgemässen Rotationsmaschine ist als Zentrifugalpumpe 100 ausgestaltet, welche das Pumpengehäuse 101 mit dem Einlass 102 und dem Auslass 103 für das zu fördernde Fluid umfasst. In dem Pumpengehäuse 101 ist das zweite Ausführungsbeispiel eines erfindungsgemässen magnetisch lagerbaren Rotors 1 vorgesehen. Zum besseren Verständnis zeigt Fig. 5 noch eine Schnittdarstellung des magnetisch lagerbaren Rotors 1 aus Fig. 4 und Fig. 6 einen Schnitt durch den Rotor 1 aus Fig. 5 entlang der Schnittlinie VI-VI in Fig. 5, also in einem Schnitt senkrecht zur axialen Richtung A.

Der Rotor 1 hat den magnetisch wirksamen Kern 2, der hier mehrere Permanentmagnete 21, nämlich zwei Permanentmagnete 21 umfasst, um die Rotation des Rotors 1 um die Solldrehachse anzutreiben, welche die axiale Richtung A festlegt. Der magnetisch wirksame Kern 2 umfasst ausser den beiden Permanentmagneten 21 einen Grundkörper 22, in welchen die Permanentmagnete 21 eingebettet sind. Der Grundkörper 22 besteht aus einem weichmagnetischen Material wie beispielsweise Eisen, Nickel-Eisen oder Silizium-Eisen. Der Grundkörper 22 bildet gemeinsam mit den Permanentmagneten 21 den magnetisch wirksamen Kern 2 des Rotors 1. Der Grundkörper 22 und die Permanentmagnete 21 sind derart ausgestaltet, dass der magnetisch wirksame Kern 2 insgesamt eine zylindrische Form hat, wobei sich die Längsachse des zylindrischen magnetisch wirksamen Kerns 2 in axialer Richtung A erstreckt.

Der Grundkörper 22 hat eine im Wesentlichen zylindrische Form mit einer ringförmigen Ausnehmung 221 in der Mantelfläche des Zylinders, welche die beiden Permanentmagnete 21 aufnimmt. Bezüglich der axialen Richtung A ist die Ausnehmung 221 in der Mitte des Grundkörpers 22 vorgesehen. Jeder der beiden Permanentmagnete 21 ist jeweils als ein gekrümmtes Segment ausgestaltet, welches die Form eines hohlen Halbzylinders aufweist, derart, dass sich die beiden Permanentmagnete 21 im Wesentlichen zu einem hohlen Zylinder ergänzen. Dabei sind die Ausnehmung 221 in dem Grundkörper 22 und die beiden Permanentmagnete 21 so ausgestaltet, dass sich der Grundkörper 22 und die beiden Permanentmagnete 21 zu dem im Wesentlichen zylindrischen magnetisch wirksamen Kern 2 ergänzen.

Im Unterschied zu dem ersten Ausführungsbeispiel, das nach dem Prinzip des lagerlosen Motors ausgestaltet ist, sind bei dem zweiten Ausführungsbeispiel der erfindungsgemässen Rotationsmaschine 100 die Antriebsfunktion für den Rotor 1 und die magnetische Lagerfunktion für den magnetisch gelagerten Rotor 1 voneinander getrennt. Dazu weist die Zentrifugalpumpe 100 einen Antriebsstator 110 auf (Fig. 4), mit welchem die Rotation des Rotors 1 um die axiale Richtung A angetrieben wird, und mindestens einen Lagerstator 111, hier zwei Lagerstatoren 111, mit welchen der Rotor 1 magnetisch und vorzugsweise berührungslos magnetisch bezüglich der Lagerstatoren 111 lagerbar ist. Alle Statoren 110, 111 sind radial aussenliegend bezüglich des Pumpengehäuses 101 und damit bezüglich des Rotors 1 angeordnet.

Der Antriebsstator 110 umgibt das Pumpengehäuse 101 bezüglich der axialen Richtung A dort, wo im magnetisch wirksamen Kern 2 des Rotors 1 die beiden Permanentmagnete 21 angeordnet sind und wirkt mit dem magnetisch wirksamen Kern 2 als elektromagnetischer Drehantrieb zusammen. Dazu umfasst der Antriebsstator 110 eine oder mehrere Wicklungen 110a, mit welchen ein elektromagnetisches Feld, beispielsweise ein Drehfeld, generierbar ist, welches in an sich bekannter Weise die Rotation des Rotors 1 um die axiale Richtung A antreibt. Bezüglich der Ausgestaltung des Antriebsstators 110 sind alle an sich bekannten Ausgestaltungen möglich. Wesentlich ist nur, dass mit dem Antriebsstator 110 die Rotation des Rotors 1 um die axiale Richtung A antreibbar ist.

Die beiden Lagerstatoren 111 für die magnetische Lagerung des Rotors 1 sind bezüglich der axialen Richtung A neben dem Antriebsstator 110 angeordnet, wobei auf jeder Seite des Antriebsstators 110 jeweils ein Lagerstator 111 vorgesehen ist, sodass der Antriebsstator 110 bezüglich der axialen Richtung A zwischen den beiden Lagerstatoren 111 angeordnet ist. Vorzugsweise haben die beiden Lagerstatoren 111 den gleichen Abstand von dem Antriebsstator 110. Jeder Lagerstator 111 umfasst eine oder mehrere Wicklungen 111a, mit welchen elektromagnetische Felder generierbar sind, mit welchen der Rotor 1 bezüglich der Lagerstatoren 111 magnetisch und vorzugsweise berührungslos magnetisch lagerbar ist. Jeder Lagerstator 111 wirkt dabei mit dem magnetisch wirksamen Kern 2 des Rotors 1 nach dem Prinzip eines Magnetlagers zusammen. Da solche Magnetlager an sich in zahlreichen Ausgestaltungen vom Stand der Technik bekannt sind, bedürfen sie hier keiner weiteren Erläuterung. Die konkrete Ausgestaltung der Lagerstatoren 111 ist nicht wesentlich für die Erfindung. Wesentlich ist nur, dass der Rotor 1 mit dem Lagerstator 111 bzw. mit den Lagerstatoren 111 magnetisch lagerbar ist und vorzugsweise berührungslos magnetisch.

Erfindungsgemäss besteht auch bei dem zweiten Ausführungsbeispiels des erfindungsgemässen Rotors 1 die Ummantelung 3 aus einem thermoplastisch verarbeitbaren, insbesondere aus einem schweissbaren, Fluoropolymer, welche den magnetisch wirksamen Kern 2 vollständig umschliesst. Ferner weist jeder Permanentmagnet 21 die metallische Beschichtung 6 auf, und zwischen der metallischen Beschichtung 6 und der Ummantelung 3 ist die Kunststoffbeschichtung 7 vorgesehen, welche wiederum aus einem Polymer besteht, das zur Familie der Parylene gehört.

Auch bei dem zweiten Ausführungsbeispiel des Rotors 1 besteht die Ummantelung 3 vorzugsweise aus dem schweissbaren PFA. Alternativ ist es bevorzugt, wenn die Ummantelung 3 aus ECTFE oder aus PVDF besteht.

Das Pumpengehäuse 101 besteht bei dem zweiten Ausführungsbeispiel vorzugsweise auch aus einem Fluoropolymer, wobei dieses jedoch nicht schweissbar oder thermoplastisch verarbeitbar sein muss. Natürlich ist es auch möglich, dass das Pumpengehäuse 101 aus dem gleichen Kunststoff bzw. Polymer besteht wie die Ummantelung 3.

Bezüglich der Ausgestaltung der metallischen Beschichtung 6 und der Kunststoffbeschichtung 7 sowie der bevorzugten Materialien für diese Beschichtungen 6, 7, gelten die Erklärungen und die Erläuterungen hinsichtlich des ersten Ausführungsbeispiels in gleicher oder sinngemäss gleicher Weise auch für das zweite Ausführungsbeispiel.

Wie dies insbesondere die Fig. 5 und die Fig. 6 zeigen, ist die metallische Beschichtung 6 unmittelbar auf jedem Permanentmagneten 21 vorgesehen. Dabei ist jeder Permanentmagnet 21 vollständig von der unmittelbar auf ihm vorgesehenen metallischen Beschichtung 6 umschlossen.

Die Kunststoffbeschichtung 7 umschliesst den magnetisch wirksamen Kern 2 vollständig. Dabei ist die Kunststoffbeschichtung 7 unmittelbar auf der Oberfläche des Grundkörpers 22 vorgesehen und unmittelbar auf demjenigen Bereich der metallischen Beschichtung 6, welche einen Teil der äusseren Begrenzungsfläche des magnetisch wirksamen Kerns bildet.

Bei der Herstellung des Rotors 1 werden also zunächst die Permanentmagnete 21 mit der metallischen Beschichtung 6 versehen. Dabei wird die metallische Beschichtung 6 auf allen Oberflächen jedes Permanentmagneten 21 abgeschieden, sodass jeder Permanentmagnet 21 vollständig beschichtet und von der metallischen Beschichtung 6 umkapselt ist. Nachdem die Permanentmagnete 21 mit der metallischen Beschichtung 6 versehen sind, werden sie in die Ausnehmung 221 im Grundkörper 22 eingesetzt. Danach wird dann auf dem gesamten magnetisch wirksamen Kern 2, also auf dem Grundkörper 22 und den darin eingesetzten Permanentmagneten 21 mit der metallischen Beschichtung 6, durch Abscheiden mindestens einer und vorzugsweise mehrerer Parylene-Schicht(en) die Kunststoffbeschichtung 7 generiert, welche den magnetisch wirksamen Kern 2 vollständig umschliesst.

In sinngemäss gleicher Weise wie bei dem ersten Ausführungsbeispiel umfasst die Ummantelung 3 vorzugsweise wiederum mehrere, beispielsweise zwei Teile, wobei der mit der Kunststoffbeschichtung 7 versehene magnetisch wirksame Kern 2 in eines der Teile eingeschoben wird und die beiden Teile anschliessend miteinander verschweisst werden.

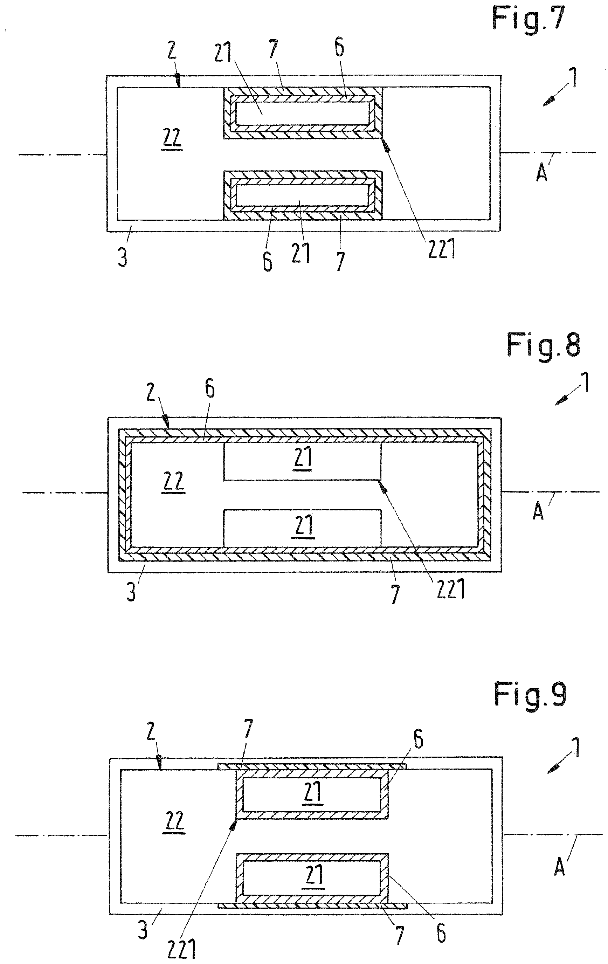

Fig. 7 zeigt in einer schematischen Darstellung eine erste Variante für das zweite Ausführungsbeispiel des magnetisch lagerbaren Rotors 1. Die Flügel 4 und die Deckplatte 5 des Rotors 1 sind in Fig. 7 nicht dargestellt.

Bei dieser ersten Variante umschliesst die Kunststoffbeschichtung 7 nicht den gesamten magnetisch wirksamen Kern 2 des Rotors 1, sondern nur jeden der beiden Permanentmagnete 21 mit der darauf vorgesehenen metallischen Beschichtung 6.

Für diese erste Variante werden also zunächst die Permanentmagnete 21 mit der metallischen Beschichtung 6 versehen. Dabei wird die metallische Beschichtung 6 auf allen Oberflächen jedes Permanentmagneten 21 abgeschieden, sodass jeder Permanentmagnet 21 vollständig beschichtet und von der metallischen Beschichtung 6 umkapselt ist. Nachdem die Permanentmagnete 21 mit der metallischen Beschichtung 6 versehen sind, wird jeweils auf jeder metallischen Beschichtung 6 durch Abscheiden mindestens einer und vorzugsweise mehrerer Parylene-Schicht(en) die Kunststoffbeschichtung 7 generiert, welche die metallische Beschichtung 6 und den von ihr umschlossenen Permanentmagneten 21 vollständig umschliesst.

Anschliessend werden die mit der metallischen Beschichtung 6 und der Kunststoffbeschichtung 7 versehenen Permanentmagnete 21 in die Ausnehmung 221 im Grundkörper 22 eingesetzt. Danach wird die Ummantelung 3 vorgesehen, welche den magnetisch wirksamen Kern 2 des Rotors 1 vollständig umschliesst.

Fig. 8 zeigt in einer schematischen Darstellung eine zweite Variante für das zweite Ausführungsbeispiel des magnetisch lagerbaren Rotors 1. Die Flügel 4 und die Deckplatte 5 des Rotors 1 sind in Fig. 8 nicht dargestellt.

Bei der zweiten Variante ist der gesamte magnetisch wirksame Kern 2 sowohl von der metallischen Beschichtung 6 als auch von der Kunststoffbeschichtung 7 jeweils vollständig umschlossen. Bei dieser Variante umschliesst also die metallische Beschichtung 6 nicht unmittelbar und vollständig die einzelnen individuellen Permanentmagnete 21, sondern nur diejenigen Oberflächen der Permanentmagnete 21, welche einen Teil der radial äusseren Oberfläche des magnetisch wirksamen Kerns 2 bilden, sind unmittelbar mit einer metallischen Beschichtung 6 versehen.

Für diese zweite Variante werden zunächst die noch nicht beschichteten Permanentmagnete 21 in die Ausnehmung 221 im Grundkörper 22 eingesetzt. Anschliessend wird der gesamte magnetisch wirksame Kern 2 - also der Grundkörper 22 mit den darin eingesetzten Permanentmagneten 21 - mit der metallischen Beschichtung 6 versehen. Dabei wird die metallische Beschichtung 6 auf allen Oberflächen des magnetisch wirksamen Kerns 2 abgeschieden, sodass dieser vollständig beschichtet und von der metallischen Beschichtung 6 vollständig umschlossen ist. Nachdem der magnetisch wirksame Kern 2 mit der metallischen Beschichtung 6 versehen ist, wird unmittelbar auf dieser metallischen Beschichtung 6 durch Abscheiden mindestens einer und vorzugsweise mehrerer Parylene-Schicht(en) die Kunststoffbeschichtung 7 generiert, welche die metallische Beschichtung 6 und den von ihr umschlossenen magnetisch wirksamen Kern 2 vollständig umschliesst. Danach wird die Ummantelung 3 vorgesehen, welche den magnetisch wirksamen Kern 2 des Rotors 1 vollständig umschliesst.

Fig. 9 zeigt in einer schematischen Darstellung eine dritte Variante für das zweite Ausführungsbeispiel des magnetisch lagerbaren Rotors 1. Die Flügel 4 und die Deckplatte 5 des Rotors 1 sind in Fig. 9 nicht dargestellt.

Bei der dritten Variante ist die metallische Beschichtung 6 wieder unmittelbar auf jedem Permanentmagneten 21 vorgesehen. Dabei ist jeder Permanentmagnet 21 vollständig von der unmittelbar auf ihm vorgesehenen metallischen Beschichtung 6 umschlossen. Die Kunststoffbeschichtung 7 umschliesst nicht den gesamten magnetisch wirksamen Kern 2 des Rotors 1, sondern überdeckt nur denjenigen Bereich der metallischen Beschichtung 6 jedes Permanentmagneten 21, welcher einen Teil der radial äusseren Oberfläche des magnetisch wirksamen Kerns 2 bildet. Das heisst, nur die radial aussen liegende Oberfläche der metallischen Beschichtung 6 wird jeweils von der Kunststoffbeschichtung 7 überdeckt. Dabei ist es bevorzugt, dass sich die Kunststoffbeschichtung 7 bezüglich der axialen Richtung A etwas weiter erstreckt als die metallische Beschichtung 6, sodass der Grenzbereich zwischen der metallischen Beschichtung 6 und der Ausnehmung 221 im Grundkörper 2 überdeckt und gegen ein Eindringen von säurehaltigen oder chemisch aggressiven Substanzen geschützt ist. Die Kunststoffbeschichtung 7 ist also vorzugsweise so ausgestaltet, dass sie bezüglich der axialen Richtung A auf beiden Seiten eine kleine Überlappung mit dem Grundkörper 22 aufweist. Da Parylene sehr gut in Ritzen, Risse oder Spalten eindringen, ist es gewährleistet, dass insbesondere die Permanentmagnete 21 geschützt sind, speziell gegen ein Eindringen von Substanzen in die Grenze zwischen der metallischen Beschichtung 6 auf den Permanentmagneten und der Ausnehmung 221 im Grundkörper 22.

Für diese dritte Variante werden zunächst die Permanentmagnete 21 jeweils mit der metallischen Beschichtung 6 versehen. Dabei wird die metallische Beschichtung 6 auf allen Oberflächen jedes Permanentmagneten 21 abgeschieden, sodass jeder Permanentmagnet 21 vollständig beschichtet und von der metallischen Beschichtung 6 umkapselt ist. Nachdem die Permanentmagnete 21 mit der metallischen Beschichtung 6 versehen sind, werden sie in die Ausnehmung 221 im Grundkörper 22 eingesetzt. Anschliessend werden die radial aussenliegenden Oberflächen jeder metallischen Beschichtung 6 mit einem Parylene beschichtet. Dazu wird unmittelbar auf diesen Oberflächen der metallischen Beschichtung 6 durch Abscheiden mindestens einer und vorzugsweise mehrerer Parylene-Schicht(en) die Kunststoffbeschichtung 7 generiert, wobei die Kunststoffbeschichtung 7 so hergestellt wird, dass sie auf beiden Seiten bezüglich der axialen Richtung A etwas mit dem Grundkörper 22 überlappt. Dies kann beispielsweise so realisiert werden, dass bei dem Abscheiden der Parylene-Schichten die nicht zu beschichtenden Bereiche des Grundkörpers 22 abgedeckt bzw. maskiert werden.

Nach Fertigstellung der Kunststoffbeschichtung 7 wird die Ummantelung 3 vorgesehen, welche den magnetisch wirksamen Kern 2 des Rotors 1 vollständig umschliesst.

Der erfindungsgemässe magnetisch lagerbare Rotor 1 sowie die erfindungsgemässe Rotationsmaschine 100, insbesondere in ihrer Ausgestaltung als Zentrifugalpumpe oder als Mischvorrichtung, sind insbesondere für Anwendungen in der Halbleiterindustrie geeignet, speziell für die Herstellungsprozesse von Halbleitern oder Halbleiterchips.

## Patentansprüche

1. Magnetisch lagerbarer Rotor für eine Rotationsmaschine mit magnetisch gelagertem Rotor, welcher Rotor einen magnetisch wirksamen Kern (2) aufweist, sowie eine Ummantelung (3) aus einem thermoplastisch verarbeitbaren Fluoropolymer, wobei die Ummantelung (3) den magnetisch wirksamen Kern (2) vollständig umschliesst, und wobei der magnetisch wirksame Kern (2) mindestens einen Permanentmagneten (21) umfasst, **dadurch gekennzeichnet, dass** jeder Permanentmagnet (21) eine metallische Beschichtung (6) zum Schutz gegen säurehaltige oder chemisch aggressive Substanzen aufweist, und dass zwischen der metallischen Beschichtung (6) und der Ummantelung (3) eine Kunststoffbeschichtung (7) vorgesehen ist, welche aus einem Polymer besteht, das zur Familie der Parylene gehört.

2. Rotor nach Anspruch 1, bei welchem die metallische Beschichtung (6) mindestens eine Schicht (61, 62, 63) umfasst, die aus Nickel oder aus Gold oder aus Rhodium besteht.

3. Rotor nach einem der vorangehenden Ansprüche, bei welchem die metallische Beschichtung (6) eine Mehrzahl, insbesondere mindestens drei, Schichten (61, 62, 63) umfasst, die übereinander angeordnet sind, wobei die innerste Schicht (61) direkt auf einer Oberfläche des Permanentmagneten (21) vorgesehen ist und vorzugsweise aus Nickel besteht.

4. Rotor nach einem der vorangehenden Ansprüche, bei welchem die metallische Beschichtung (6) genau drei Schichten (61, 62, 63) umfasst, die übereinander angeordnet sind, wobei die innerste Schicht (61) und die äusserste Schicht (63) jeweils aus Nickel bestehen, und wobei die dazwischen liegende mittlere Schicht (62) vorzugsweise aus Kupfer, oder aus Gold oder aus Rhodium besteht.

5. Rotor nach einem der vorangehenden Ansprüche, bei welchem die Ummantelung (3) aus einem Perfluoralkoxy-Polymer besteht oder aus Ethylenchlortrifluorethylen oder aus Polyvinylidenfluorid.

6. Rotor nach einem der vorangehenden Ansprüche, wobei zwischen der Kunststoffbeschichtung (7) und der Ummantelung (3) eine Wärmeschutzfolie (9) vorgesehen ist, die vorzugsweise eine Polyimid-Folie ist.

7. Rotor nach einem der vorangehenden Ansprüche, bei welchem die Kunststoffbeschichtung (7) aus einem fluorierten Parylene besteht, vorzugsweise aus aliphatisch fluorierten Parylene.

8. Rotor nach einem der vorangehenden Ansprüche, wobei die metallische Beschichtung (6) den magnetisch wirksamen Kern (2) vollständig umschliesst.

9. Rotor nach einem der vorangehenden Ansprüche, wobei die Kunststoffbeschichtung (7) den magnetisch wirksamen Kern (2) vollständig umschliessst.

10. Rotor nach einem der vorangehenden Ansprüche, wobei die metallische Beschichtung (6) unmittelbar auf jedem Permanentmagneten (21) vorgesehen ist, und wobei jeder Permanentmagnet (21) vollständig von der unmittelbar auf ihm vorgesehenen metallischen Beschichtung (6) umschlossen ist.

11. Rotor nach Anspruch 10, wobei die Kunststoffbeschichtung (7) unmittelbar auf der metallischen Beschichtung (6) vorgesehen ist, und wobei jede metallische Beschichtung (6) vollständig von der unmittelbar auf ihr vorgesehenen Kunststoffbeschichtung (7) umschlossen ist.

12. Rotor nach einem der vorangehenden Ansprüche, wobei der magnetisch wirksame Kern (2) aus einem Permanentmagneten (21) besteht, wobei der Permanentmagnet (21) vorzugsweise einstückig und insbesondere bevorzugt ringförmig ausgestaltet ist.

13. Rotor nach einem der vorangehenden Ansprüche, bei welchem die Ummantelung (3) ein topfförmiges Gehäuseteil (31) aufweist, welches den magnetisch wirksamen Kern (2) aufnimmt, sowie einen Deckel (32), welcher mit dem Gehäuseteil (31) verschweisst ist, wobei das topfförmige Gehäuseteil (31) vorzugsweise so ausgestaltet ist, dass zwischen dem magnetisch wirksamen Kern (2) und dem Gehäuseteil (31) ein Luftspalt (81, 82) existiert.

14. Rotationsmaschine, insbesondere Zentrifugalpumpe oder Mischvorrichtung, zum Einwirken auf ein Fluid, mit einem magnetisch lagerbaren Rotor (1) und mit einem Stator (104, 110), mit welchem der Rotor (1) im Betriebszustand berührungslos magnetisch zur Rotation um eine axiale Richtung (A) antreibbar ist, **dadurch gekennzeichnet, dass** der Rotor (1) magnetisch gelagert ist und gemäss einem der vorangehenden Ansprüche ausgestaltet ist.

15. Rotationsmaschine nach Anspruch 14, ausgestaltet als lagerloser Motor, bei welchem der Stator als Lager- und Antriebsstator (104) ausgestaltet ist, mit welchem der Rotor (1) im Betriebszustand berührungslos magnetisch antreibbar und zumindest radial bezüglich des Stators (104) berührungslos magnetisch lagerbar ist.

## Claims

1. A rotor for a rotary machine with a magnetically levitated rotor, which rotor can be magnetically levitated, which rotor has a magnetically effective core (2) and a sheathing (3) made of a thermoplastically processible fluoropolymer, the sheathing (3) completely enclosing the magnetically effective core (2), and wherein the magnetically effective core (2) comprises at least one permanent magnet (21), **characterized in that** each permanent magnet (21) has a metallic coating (6) for protection against acidic or chemically aggressive substances, and **in that** a plastic coating (7) is provided between the metallic coating (6) and the sheathing (3), which plastic coating consists of a polymer belonging to the family of parylenes.

2. A rotor according to claim 1, in which the metallic coating (6) comprises at least one layer (61, 62, 63) consisting of nickel or of gold or of rhodium.

3. A rotor according to anyone of the preceding claims, in which the metallic coating (6) comprises a plurality, in particular at least three, layers (61, 62, 63) being arranged one above the other, wherein the innermost layer (61) is provided directly on a surface of the permanent magnet (21) and preferably consists of nickel.

4. A rotor according to anyone of the preceding claims, in which the metallic coating (6) comprises exactly three layers (61, 62, 63) being arranged one above the other, wherein the innermost layer (61) and the outermost layer (63) each consist of nickel and wherein the intermediate middle layer (62) preferably consists of copper or of gold or of rhodium.

5. A rotor according to anyone of the preceding claims, in which the sheathing (3) consists of a perfluoroalkoxy polymer or of ethylene chlorotrifluoroethylene or of polyvinylidene fluoride.

6. A rotor according to anyone of the preceding claims, wherein a heat protection film (9) is provided between the plastic coating (7) and the sheathing (3), which heat protection film is preferably a polyimide film.

7. A rotor according to anyone of the preceding claims, in which the plastic coating (7) consists of a fluorinated parylene, preferably of aliphatically fluorinated parylene.

8. A rotor according to anyone of the preceding claims, wherein the metallic coating (6) completely encloses the magnetically effective core (2).

9. A rotor according to anyone of the preceding claims, wherein the plastic coating (7) completely encloses the magnetically effective core (2).

10. A rotor according to anyone of the preceding claims, wherein the metallic coating (6) is provided directly on each permanent magnet (21) and wherein each permanent magnet (21) is completely enclosed by the metallic coating (6) provided directly thereon.

11. A rotor according to claim 10, wherein the plastic coating (7) is provided directly on the metallic coating (6) and wherein each metallic coating (6) is completely enclosed by the plastic coating (7) provided directly thereon.

12. A rotor according to anyone of the preceding claims, wherein the magnetically effective core (2) consists of a permanent magnet (21), wherein the permanent magnet (21) is preferably designed in one piece and in particular preferably in the form of a ring.

13. A rotor according to anyone of the preceding claims, in which the sheathing (3) has a cup-shaped housing part (31), which receives the magnetically effective core (2), and a cover (32) being welded to the housing part (31), wherein the cup-shaped housing part (31) is preferably designed in such a manner that an air gap (81, 82) exists between the magnetically effective core (2) and the housing part (31).

14. A rotary machine, in particular a centrifugal pump or a mixing device, for affecting a fluid, with a rotor (1) that can be magnetically levitated and with a stator (104, 110), with which the rotor (1) can be driven in a magnetically contactless manner for rotation about an axial direction (A) in the operating state, **characterized in that** the rotor (1) is magnetically levitated and designed according to anyone of the preceding claims.

15. A rotary machine according to claim 14, designed as a bearing-less motor, in which the stator is designed as a bearing stator and drive stator (104) and with which the rotor (1) can be driven in a magnetically contactless manner in the operating state and with which the rotor (1) can be levitated in a magnetically contactless manner at least radially with respect to the stator (104).

## Revendications

1. Un rotor qui peut être supporté magnétiquement pour une machine rotative avec un rotor à support magnétique, lequel rotor présente un noyau magnétiquement actif (2) et une gaine (3) en fluoropolymère pouvant être traité thermoplastiquement, dans lequel la gaine (3) entoure complètement le noyau magnétiquement actif (2), et dans lequel le noyau magnétiquement actif (2) comprend au moins un aimant permanent (21), **caractérisé en ce que** chaque aimant permanent (21) présente un revêtement métallique (6) pour la protection contre les substances acides ou chimiquement agressives, et **en ce qu'**un revêtement plastique (7) est prévu entre le revêtement métallique (6) et la gaine (3), lequel revêtement plastique (7) est constitué d'un polymère appartenant à la famille du parylène.

2. Le rotor selon la revendication 1, dans lequel le revêtement métallique (6) comprend au moins une couche (61, 62, 63) qui est constituée de nickel ou d'or ou de rhodium.

3. Le rotor selon l'une des revendications précédentes, dans lequel le revêtement métallique (6) comprend une pluralité de, en particulier au moins trois, couches (61, 62, 63) qui sont disposées les unes au-dessus des autres, dans lequel la couche la plus intérieure (61) est prévue directement sur une surface de l'aimant permanent (21) et est constituée de préférence de nickel.

4. Le rotor selon l'une des revendications précédentes, dans lequel le revêtement métallique (6) comprend exactement trois couches (61, 62, 63) qui sont disposées les unes au-dessus des autres, dans lequel la couche la plus intérieure (61) et la couche la plus extérieure (63) sont chacune constituée de nickel, et dans lequel la couche intermédiaire moyenne (62) est constituée de préférence de cuivre, ou d'or ou de rhodium.

5. Le rotor selon l'une des revendications précédentes, dans lequel la gaine (3) est constituée d'un polymère perfluoroalcoxy, ou de chlorotrifluoroéthylène d'éthylène ou de fluorure de polyvinylidène.

6. Le rotor selon l'une des revendications précédentes, dans lequel un film de protection thermique (9) est prévu entre le revêtement plastique (7) et la gaine (3), qui est de préférence un film de polyimide.

7. Le rotor selon l'une des revendications précédentes, dans lequel le revêtement plastique (7) est constitué d'un parylène fluoré, de préférence un parylène fluoré aliphatique.

8. Le rotor selon l'une des revendications précédentes, dans lequel le revêtement métallique (6) enferme complètement le noyau magnétiquement actif (2).

9. Le rotor selon l'une des revendications précédentes, dans lequel le revêtement plastique (7) entoure complètement le noyau magnétiquement actif (2).

10. Le rotor selon l'une des revendications précédentes, dans lequel le revêtement métallique (6) est prévu directement sur chaque aimant permanent (21), et dans lequel chaque aimant permanent (21) est complètement entouré par le revêtement métallique (6) prévu directement sur celui-ci.

11. Le rotor selon la revendication 10, dans lequel le revêtement plastique (7) est prévu directement sur le revêtement métallique (6), et dans lequel chaque revêtement métallique (6) est complètement entouré par le revêtement plastique (7) prévu directement sur celui-ci.

12. Le rotor selon l'une des revendications précédentes, dans lequel le noyau magnétiquement actif (2) est constitué d'un aimant permanent (21), dans lequel l'aimant permanent (21) est conçu de préférence d'une seule pièce et en particulier de préférence annulaire.

13. Le rotor selon l'une des revendications précédentes, dans lequel la gaine (3) comprend une partie de boîtier (31) en forme de pot qui reçoit le noyau magnétiquement actif (2), et un couvercle (32) qui est soudé à la partie de boîtier (31), dans lequel la partie de boîtier (31) en forme de pot est de préférence conçue de telle manière qu'un espace d'air (81, 82) existe entre le noyau magnétiquement actif (2) et la partie de boîtier (31).

14. Une machine rotative, en particulier une pompe centrifuge ou un dispositif de mélange, destinée à agir sur un fluide, avec un rotor (1) qui peut être supporté magnétiquement et avec un stator (104, 110), au moyen duquel le rotor (1) peut être entraîné magnétiquement sans contact pour une rotation autour d'une direction axiale (A) à l'état de fonctionnement, **caractérisé en ce que** le rotor (1) est supporté magnétiquement et est conçu selon l'une des revendications précédentes.

15. La machine rotative selon la revendication 14, conçu comme un moteur sans palier, dans lequel le stator est conçu comme un stator de palier et d'entraînement (104), au moyen duquel le rotor (1), à l'état de fonctionnement, peut être entraîné magnétiquement sans contact et peut être supporté magnétiquement sans contact au moins radialement par rapport au stator (104).
